# EUROPÄISCHE PATENTSCHRIFT

(11) **EP 3 149 821 B1**
(45) Veröffentlichungstag und Bekanntmachung des Hinweises auf die Patenterteilung: **19.10.2022**
(21) Anmeldenummer: 15727307.9
(22) Anmeldetag: 27.05.2015
(51) Int. Cl.: H02G 9/10, E02D 29/12

(54) **AUSGELAGERTER HAUSANSCHLUSSRAUM ZUR AUSBILDUNG EINES HAUSANSCHLUSSES**
SERVICE CONNECTION ROOM PLACED OUTSIDE FOR FORMING A SERVICE CONNECTION
LOCAL DE BRANCHEMENT DÉLOCALISÉ DESTINÉ À PERMETTRE UN BRANCHEMENT INDIVIDUEL

(30) Priorität: 27.05.2014 DE 102014007672
(43) Veröffentlichungstag der Anmeldung: 05.04.2017
(73) Patentinhaber: HWR System GmbH, 33604 Bielefeld (DE)
(72) Erfinder: BECIROVIC, Mirsada, 33604 Bielefeld (DE); WILLER, Beate, 33602 Bielefeld (DE)
(74) Vertreter: Schober, Mirko
(86) Internationale Anmeldenummer: PCT/EP2015/001078
(87) Internationale Veröffentlichungsnummer: WO 2015/180837

(56) Entgegenhaltungen:
- DE-A1- 10 233 981
- DE-A1- 10 348 782
- US-A- 5 258 572
- US-A1- 2013 055 650
- Lew Verteilnetz Gmbh ET AL: "Leitfaden für Planung und Bau von Mehrspartenhausanschlüssen", , 1. März 2014 (2014-03-01), XP055214316, Gefunden im Internet: URL:http://www.fhrk.de/wp-content/uploads/ 2014/01/Leitfaden_Hausanschluss1.pdf [gefunden am 2015-09-18]
- "Der Hausanschlussraum für Strom, Erdgas, Wasser und Telekommunikation", , 26. November 2013 (2013-11-26), XP055214581, Gefunden im Internet: URL:http://web.archive.org/web/20131126154 739/http://www.stadtwerke-rheine.de/filead min/user_upload/Downloaddateien/Privatkund en/Hausanschluss/Anforderungen_Hausanschlu ssraum.pdf [gefunden am 2015-09-18]
- Vewsaar E V Vewsaar: "Verband der Energie-und Wasserwirtschaft des Saarlandes", , 31 December 2011 (2011-12-31), XP055516112, Retrieved from the Internet: URL:https://www.sw-igb.de/fileadmin/user_u pload/PDF/verordnungen_bedingungen/Ergaenz ungen_zur_TAB_2007_05-2011.pdf [retrieved on 2018-10-17]

## Beschreibung

### TECHNISCHES GEBIET

Die Erfindung betrifft einen ausgelagerten Hausanschlussraum zur Ausbildung eines Hausanschlusses für ein Gebäude mit den Merkmalen des Oberbegriffs von Patentanspruch 1.

### STAND DER TECHNIK

Als Hausanschluss wird allgemein die Stelle zur Verbindung eines Gebäudes mit den jeweiligen Ver- und/oder Entsorgungsunternehmen bezeichnet. Hierbei gilt es, die unternehmensseitig zumeist unterirdisch verlegten Leitungen mit den jeweiligen Verbrauchern und/oder Einleitern eines Gebäudes zu verbinden.

Dabei dienen die Versorgungsleitungen beispielsweise der Bereitstellung von Elektrizität sowie Gas, Kommunikation und Trinkwasser wie auch möglicher Fernwärme. Demgegenüber ermöglichen Versorgungsleitungen beispielsweise die Aufnahme und Weiterleitung anfallenden Abwassers und/oder Regenwassers.

Da die Ver- und/oder Entsorgungsleitungen in einer jeweils vorgeschriebenen Tiefe im Erdreich angeordnet sind, erfolgt die Anordnung des Hausanschlusses zumeist in Ebene des Kellergeschosses. Bei nicht unterkellerten Gebäuden ergibt sich dieser von unten im Bereich der Bodenplatte bzw. des Fundaments.

In jedem Fall verlangt der Hausanschluss eine Durchdringung der Gebäudehülle, woraus sich entsprechende Anforderungen an dessen Dichtigkeit ergeben. Hierzu findet ein geeignetes Bauteil in Form einer Hauseinführung Verwendung. Als Bestandteil des Hausanschlusses dient dieses der gesicherten Hindurch-führung wenigstens einer der Versorgungsleitungen.

Derartige Hauseinführungen können dabei auch mehrere Versorgungsleitungen gleichzeitig aufnehmen, so dass diese in Einzel- und Mehrsparteneinführungen unterschieden werden. Als Sparten werden hierbei die voneinander unterschiedlichen Arten der Versorgungsleitungen bezeichnet.

Obwohl die zur Ausbildung eines Hausanschlusses notwendigen Bauteile bekannt und im Wesentlichen ausgereift sind, ergibt sich ein mitunter nicht unwesentlicher Aufwand hinsichtlich der damit einhergehenden Erdarbeiten. So sind zur vollständigen Erschließung eines Grundstücks neben dem Anschluss an das öffentliche Straßen- und Wegenetz zum Teil mehrmalige Aufgrabungen notwendig. Hierbei müssen die zumeist straßenseitig und somit außerhalb des Grundstücks vorliegenden Ver- und Entsorgungsleitungen mit dem anzuschließenden Gebäude verbunden werden.

Da die einzelnen Leitungen zumeist von unterschiedlichen Unternehmen und Anbietern betrieben werden, kommt es nicht selten zu einem mehrmaligen Aufgraben und Verfüllen der notwendigen Gräben. Zu den hierdurch entstehenden hohen Kosten wird überdies eine genaue Terminierung zur Realisierung des Hausanschlusses deutlich erschwert.

Hinzu kommt, dass die Betreiber zumeist auf einem abgeschlossenen Zustand des Baukörpers bestehen, was eine Vermeidung des Gebäudezugangs durch unbefugte Dritte meint. Dies verlangt die Verschließbarkeit der Gebäudeöffnungen beispielsweise durch Türen und Fenster. Aus diesem Grund kann der Hausanschluss erst nach Realisierung des abschließbaren Gebäudezustandes erfolgen.

In diesem Zusammenhang schlägt die DE 198 17 665 C2 ein Verfahren vor, mit welchem mehrere Sparten auch nacheinander ohne weitere Aufgrabungen und Verfüllungen verlegt werden können. Die Idee liegt in einem Versorgungsblock, welcher innerhalb des Grundstücks in das Erdreich eingebracht wird. Dessen Einbringung erfolgt dabei im Zusammenhang mit der Wasserverlegung. Kerngedanke ist dabei das Vorhalten einzelner Leitungen innerhalb des Versorgungsblocks, welche mit dem Hausanschluss verbunden und betreiberseitig nacheinander anschließbar sind.

Auf diese Weise werden die notwendigen Erdarbeiten auf ein Minimum reduziert. Zudem entfällt eine aufwendige Koordination der betreiberseitigen Anschlusstermine.

Da zur Ausbildung des Hausanschlusses, insbesondere der Hauseinführung bei unterkellerten Gebäuden, eine die Kellerwand durchdringende Kernbohrung notwendig ist, wird die bereits angeordnete Isolierung und/oder Dämmung der Kellerebene zwangsläufig verletzt.

Hierzu schlägt die DE 101 58 582 A1 ein formstabiles Fertigbauteil vor, welches eingebaute Durchdringungen in Form von vorgefertigten Hülsenelementen besitzt. Die Hülsenelemente sind dazu vorgesehen, die notwendigen Durchführungen bereitzustellen, beispielsweise für Rohre, Kabel, Schläuche und Kanäle. Hierdurch entfallen nachträgliche Arbeiten an der Gebäudehülle, da diese die erforderlichen Durchführungen bereits besitzt, um einen Hausanschluss zu realisieren.

Weiterhin ist aus der DE 92 07 543 U1 ein begehbares Schachtbauwerk aus wenigstens einem Fertigbauteil bekannt, welches der Ausbildung einer reinen Wasserversorgung dient. Hierzu beinhaltet das Schachtbauwerk bereits eine in seinem Inneren angeordnete Schachtinstallation sowie mindestens zwei in sich gegenüberliegenden Wänden des Schachtbauwerks angeordnete Wanddurchführungen. Die Schachtinstallation weist dabei beispielsweise einen Absperrschieber auf. Durch die vorgeschlagene Ausgestaltung wird ein hoher Grad an Vorfertigung erreicht, so dass das Schachtbauwerk im Ganzen an seinen Aufstellungsort transportiert und dort im Erdreich aufgestellt werden kann. Zur Nutzung bedarf es der Verbindung von Zu- und Ablaufrohren mit der Schachtinstallation, welche hierfür durch die Wanddurchführungen in das Innere des Schachtbauwerks zu führen sind.

Mit der DE 102 33 981 A1 wurde ein Hausanschlussschacht bekannt, welcher der Aufnahme und Verteilung von Erschließungs- sowie Ver- und Entsorgungsleitungen für ein Gebäude dient. Ziel ist die Reduzierung der notwendigen Erdarbeiten zur Realisierung des Hausanschlusses eines Gebäudes an das Ver- und Entsorgungsnetz. Hierzu ist der Hausanschlussschacht unterirdisch anordenbar und setzt sich aus wenigstens einem vorgefertigten hohlen Unterteil sowie einer Abdeckplatte zusammen. Das Unterteil weist eine Vielzahl an Öffnungen in seinen einzelnen Seitenwänden auf, um die Leitung ein- und/oder auszuführen. Von hier aus können besagte Leitungen mit zum Gebäude reichenden Anschlussleitungen verbunden werden, für die weitere Öffnungen in einer dem Gebäude zugewandten Seitenwand des Unterteils vorgesehen sind. Die in das Gebäude reichenden Anschlussleitungen dienen dann der Ausbildung des Hausanschlusses innerhalb des Gebäudes. Danach stellt der Hausanschlussschacht einen Knotenpunkt zwischen den bestehenden Erschließungs-, Ver- sowie Entsorgungsleitungen und dem innerhalb des Gebäudes einzurichtenden Hausanschlussraum dar.

Die DE 100 23 399 A1 verfolgt ebenfalls den Grundgedanken, die an einem Grundstück im Erdreich vorbeilaufenden Hauptleitungen (z.B. Gas, Wasser, Fernwärme) ohne die Notwendigkeit eines mitunter mehrmaligen Freilegens leichter erreichbar zu machen. Hierzu wird die Anordnung eines Erschließungs-, Revisions- und Verteilerschachts in Form eines unterirdischen begehbaren Baukörpers vorgeschlagen, durch welchen hindurch die Hauptleitungen geführt sind. Auf diese Weise können die einzelnen Hauptleitungen bei Bedarf über einen in besagtem Baukörper geschaffenen zentralen Zugang frei zugänglich erreicht werden, ohne dass ein sonst notwendiger Erdaushub mit anschließender Verfüllung anfällt. Nachdem das an die Hauptleitungen anzuschließende Gebäude erstellt ist, können so die zur Verbindung des unterirdischen Baukörpers mit dem Gebäude notwendigen Anschlussleitungen auf dem Grundstück verlegt und über in dem unterirdischen Baukörper vorgesehene Öffnungen in diesen hinein verlegt werden. Danach können die einzelnen Ver-/Entsorgungsanbieter voneinander zeitlich unabhängig den unterirdischen Baukörper betreten und beispielsweise Anbohrschieber an die entsprechende/n Hauptleitung/en anbringen, um die Verbindungen zu der/den Anschlussleitung/en zu realisieren. Auf der Oberseite des Baukörpers ist eine Absenkung ausgebildet, so dass die Hauptstromkabel im Bereich der Absenkung außerhalb des Baukörpers über diesen geführt werden können. Weiterhin kann auch eine zu dem unterirdischen Baukörper beabstandete Winkelplatte vorgesehen sein, welche zur Ausbildung eines auf der dem Baukörper gegenüberliegenden Straßenseite gelegenen Anschlusses dient. Diese wird um sich zwischen der Winkelplatte und dem unterirdischen Baukörper erstreckende Leerrohre ergänzt. Somit können die Anschlussleitungen entweder direkt von dem unterirdischen Baukörper oder unter Zwischenschaltung der Winkelplatte in den dafür vorgesehenen Hausanschlussraum des jeweiligen Gebäudes geführt werden, in welchem dann die notwendigen Bauteilen und Geräten wie beispielsweise Absperreinrichtungen, Regel- und Zählgeräte sowie Rohr- und Elektroleitungen zur Ausbildung des Hausanschlusses angeordnet sind.

Der US 3,438,157 A ist ein würfelförmiger Schacht aus einzelnen Betonfertigteilen zu entnehmen, welcher zum Aufbau innerhalb einer Baugrube vorgesehen ist. In dieser Anordnung dient der Schacht dem abschnittsweisen umschließen von im Erdboden verlegten Rohren mit sich darin erstreckenden Leitungskabeln. Der Schacht setzt sich hierfür aus einem kastenförmigen Unterteil und einem mit dem Unterteil korrespondierenden kastenförmigen Oberteil zusammen. Das Unterteil ist in zwei im Querschnitt L-förmige Einzelteile aufgeteilt, welche nach ihrem Ablegen in der Baugruppe über Verbindungsmittel miteinander verbindbar sind. Demgegenüber ist das Oberteil einstückig ausgebildet, wobei wenigstens zwei seiner gegenüberliegenden Seitenwände bis zu ihrem jeweiligen unteren Rand reichende Ausschnitte aufweisen. Die Ausschnitte sind dazu vorgesehen, um die von den Rohren umgebenden Leitungskabel zu umgreifen. Auf der Oberseite des Oberteils ist eine Öffnung vorgesehen, durch welche hindurch eine Begehbar-keit ermöglicht ist.

Mit der DE 18 05 381 A1 wurde ein vorgefertigter begehbarer Schacht aus einem jeweils monolithischen Schachtoberteil und Schachtunterteil vorgeschlagen, welcher als Kabelschacht für Stromleitungen dient. Hierzu weist der Schacht in seinen Seitenwänden angeordnete Ausnehmungen für Kabeleinführungen auf, durch welche die jeweiligen Kabel in den Schacht hinein und aus diesem heraus geführt werden können.

In der DE 10 2009 060 439 A1 wird ein Abwassersammelschacht beschrieben, welcher einen Zulauf und eine demgegenüber in der Höhe versetzte Ableitung aufweist. Weiterhin umfasst der Abwassersammelschacht eine in diesem angeordnete Hebeanlage. Innerhalb des Abwassersammelschachtes ist zusätzlich eine Vorrichtung zur Rückgewinnung der Restwärme des Abwassers mit wenigstens einem Wärmetauscher vorgesehen. Danach ist der Abwassersammelschacht zur Wärmerückgewinnung vorgesehen. Weiterer einschlägiger Stand der Technik findet sich in DE10348782A1, US2013/055650A1 und in den Internetdokumenten "Der Hausanschlussraum für Strom, Erdgas, Wasser und Telekommunikation" (URL: https://www.stadtwerke-rheine.de/de/Kopfnavigation/Netzel /Gasnetz/Gasnetzl/ Anforderungen-an-den-Hausanschlussraum.pdf) und "Leitfaden für Planung und Bau von Mehrspartenhausanschlüssen" (url. https://www.swa-netze.de/fileadmin/Downloadfiles/ Service/06_Gebaeudeanschluss_und_Inbetriebnahme/05_Formulare_und_BroschMSH_Leitfaden.pdf)

Betrachtet man das Innere eines Gebäudes, so verlangt der Hausanschluss einen zugehörigen Hausanschlussraum oder zumindest eine geeignete Hausanschlusswand. In jedem Fall handelt es sich hierbei um einen Innenbereich des Gebäudes, welcher für die Nutzung als Wohnfläche nahezu unbrauchbar ist. Dies liegt im Wesentlichen an dem Raumbedarf der anzuordnenden Bauteile und Geräte. Hier sind beispielsweise Absperreinrichtungen sowie Regel- und Zählgeräte wie auch Rohr- und Elektroleitungen aufzuführen, um nur einige zu nennen. Hinzu kommen etwaige Sicherheitsbestimmungen und die geforderte Zugänglichkeit für Warte- sowie Ablesearbeiten.

Im Ergebnis geht hierbei teurer und mitunter knapper Wohnraum verloren. Dies wird umso deutlicher, wenn man den Trend im Neubau zum Verzicht auf eine Kellerebene betrachtet, welche den Raumverlust noch am ehesten verkraften lässt. Allein diese Tatsache macht deutlich, dass die Ausbildung von Hausanschlüssen daher auch weiterhin durchaus noch Raum für Verbesserungen aufweist.

### DIE ERFINDUNG

Vor diesem Hintergrund liegt der vorliegenden Erfindung die Aufgabe zugrunde, eine kostengünstige Möglichkeit zur Realisierung eines Hausanschlusses aufzuzeigen, welche einen nur geringen Platzbedarf im Inneren eines Gebäudes verlangt und gleichzeitig eine hohe Flexibilität bietet.

Die Lösung dieser Aufgabe besteht nach der Erfindung in einem ausgelagerten Hausanschlussraum mit den Merkmalen von Patentanspruch 1. Vorteilhafte Weiterbildungen des grundsätzlichen Erfindungsgedankens sind Gegenstand der abhängigen Patentansprüche.

Danach wird zunächst ein ausgelagerter Hausanschlussraum aufgezeigt, welcher zur Ausbildung eines Hausanschlusses für ein Gebäude außerhalb des Gebäudes dient. Bei dem Gebäude kann es sich insbesondere um mindestens ein Wohngebäude handeln.

Der ausgelagerte Hausanschlussraum umfasst einen Grundkörper, welcher mindestens eine Durchführung besitzt. Der Grundkörper ist zur Aufnahme von Bauteilen und Geräten für den Hausanschluss vorgesehen, insbesondere von Absperreinrichtungen sowie Regel- und Zählgeräten nebst Rohr- und Elektroleitungen. Die eine Hauseinführung in Form einer Mehrsparteneinführung besitzende Durchführung ist dazu ausgebildet, mehrere Versorgungsleitungen aufzunehmen. Dies meint, dass die Versorgungsleitungen durch die Durchführung hindurchführbar sind. Hierdurch können insbesondere Elektrizität sowie Gas, Kommunikation und Trinkwasser wie auch möglicher Fernwärme bereitgestellt werden.

Erfindungsgemäß ist der Grundkörper als begehbare Raumzelle ausgebildet. Insofern kann es sich bei dem Grundkörper um einen bevorzugt selbsttragenden Hohlkörper handeln, welcher derart ausgebildet ist, dass dieser von einer Person betreten werden kann. Insbesondere sieht die Erfindung in Bezug auf die angedachte Lage des Grundkörpers vor, dass dieser außerhalb des zugehörigen Gebäudes angeordnet ist.

Der sich hieraus ergebende Vorteil liegt zunächst in der nunmehr möglichen Ausgestaltung, den Hausanschluss außerhalb des Gebäudes vornehmen zu können. Mit anderen Worten stellt der außerhalb des Gebäudes gelegene Grundkörper einen ausreichenden Raum zur Verfügung, welcher quasi als ausgelagerter Hausanschlussraum genutzt werden kann. Auf diese Weise bleibt die durch die Gebäudehülle eingeschlossene Kubatur zu einem deutlich höheren Anteil beispielsweise für Wohnzwecke enthalten.

Da der Grundkörper als in sich abgeschlossenes Fertigbauteil angeliefert werden kann, steht direkt ein in sich abschließbarer Raum zur Verfügung. Hierdurch können die betreiberseitigen Anschlüsse in vorteilhafter Weise unabhängig von dem eigentlichen Baufortschritt des Gebäudes durchgeführt werden.

Besonders bevorzugt kann der ausgelagerte Hausanschlussraum hierzu in einer entsprechenden Ausgrabung auf dem Grundstück angeordnet werden, insbesondere unterirdisch. Eine vorteilhafte Lage könnte hierbei beispielsweise an die Grundstücksgrenze heranreichen, um die zumeist tiefen Aufgrabungen für die betreiberseitigen Anschlüsse an den Hausanschluss auf ein Minimum zu reduzieren.

Die Durchführung kann im Sinne der Erfindung als Hauseinführung angesehen werden.

Da das Fertigbauteil als quasi autarker Hausanschlussraum anzusehen ist, kann die eigentliche Anbindung an die Infrastruktur des zugehörigen Gebäudes zu einem Zeitpunkt erfolgen, welcher im Gesamtgeschehen als hierfür geeignet anzusehen ist. Insbesondere ist die Verbindung des ausgelagerten Hausanschlussraumes mit dem Gebäude nahezu unabhängig von der betreiberseitigen Anbindung.

Durch die bereits enthaltene Durchführung muss diese nun auch nicht mehr nachträglich in die Gebäudehülle eingebracht werden. Dies gilt auch für die ansonsten mitunter mehrfach notwendigen Aufgrabungen und Verfüllungen zur Verlegung sämtlicher Sparten. In idealer Weise kann nunmehr in einem einzelnen Arbeitsgang die Verlegung der notwendigen Leitungen zwischen dem ausgelagerten Hausanschlussraum und dem Gebäude erfolgen.

Weiterhin reduzieren sich etwaige Änderungs- und/oder Erweiterungsvorhaben des Hausanschlusses auf den ausgelagerten Hausanschlussraum, so dass die Gebäudehülle mitunter nur gering oder gar nicht betroffen ist. Dies ist insbesondere im Zusammenhang mit möglicherweise nachträglich zu installierenden Anlagen der Fall, welche beispielsweise der Energiegewinnung dienen. Da die gewonnene oder überschüssige Energie zumeist in das Betreibernetz eingespeist wird, kann sich der hierfür erforderliche Übergabepunkt mit all seinen Arbeiten somit nur auf den ausgelagerten Hausanschlussraum reduzieren.

Insbesondere mit Blick auf die Erschließung eines Baugebietes und der Erstellung mehrerer Gebäude ergibt sich ferner die Möglichkeit, etwaige Synergieeffekte zu nutzen. Am Beispiel von fünf Reihen- oder Einfamilienhäusern wird schnell deutlich, dass hier regelmäßig fünf Hausanschlüsse zu fünf unterschiedlichen Zeitpunkten zu realisieren sind. Sofern hier eine Einigung zwischen den einzelnen Eigentümern erfolgt, können diese sich einen gemeinsamen Hausanschlussraum in Bezug auf den erfindungsgemäßen Hausanschlussraum teilen. Dieser verlangt lediglich eine einzelne Anbindung, wohingegen die Verbindung zu den einzelnen Häusern zu voneinander unterschiedlichen Zeitpunkten erfolgen kann. Hierdurch lassen sich im Wesentlichen die für die Erschließung anstehenden Kosten mitunter deutlich reduzieren.

Dieser Vorteil gilt selbstverständlich auch für mögliche nachträgliche Arbeiten, welche ebenfalls nur an dem erfindungsgemäßen Hausanschlussraum vorgenommen werden müssen.

Gemäß einer vorteilhaften Weiterbildung der Erfindung kann der Grundkörper diesen zumindest seitlich begrenzende Wände besitzen. Hierbei ist angedacht, dass die Durchführung in vorteilhafter Weise in einer dieser Wände angeordnet sein kann.

Selbstverständlich ist auch denkbar, dass die Durchführung in einer den Grundkörper des ausgelagerten Hausanschlussraumes nach unten begrenzende Bodenplatte angeordnet sein kann. Dies hängt im Wesentlichen von der Frage der Erreichbarkeit der Durchführung für den Versorger bzw. Entsorger und dessen Vorgaben ab, so dass die hierfür notwendige Entscheidung von dem jeweiligen Fachmann zu treffen ist.

Die Erfindung sieht vor, dass der Grundkörper bevorzugt eine verschließbare Zugangsöffnung besitzen kann. In diesem Zusammenhang ist die Zugangsöffnung dazu ausgebildet, den Zugang in das Innere des Grundkörpers zu ermöglichen. Mit anderen Worten ist die Zugangsöffnung dazu ausgebildet, durch diese hindurch in das Innere des Grundkörpers zu gelangen.

Auf diese Weise kann den oder dem jeweiligen Versorger(n) unabhängig von einem Betreten des Gebäudes Zugang zu dem Hausanschluss ermöglicht werden. So kann das hierfür notwendige Zugangsmittel, wie etwa ein Schlüssel, beim Versorger deponiert werden, so dass dieser frei in seiner Zeiteinteilung für eine Begehung und Wartung oder Reparatur ist. Auf der anderen Seite wird hierdurch die zeitliche Flexibilität für denjenigen erhöht, welcher für die Gewährung des Zugangs zum Hausanschluss verantwortlich ist. Besonders bevorzugt kann der Grundkörper eine Aufnahme für eine Wasserentsorgung aufweisen. Diese kann in vorteilhafter Weise in einer der den Grundkörper seitlich begrenzenden Wände angeordnet sein. Bei der Wasserentsorgung kann es sich um eine solche handeln, welche zur Übergabe von Schmutzwasser und/oder Regenwasser an die öffentliche Kanalisation dient.

In diesem Zusammenhang oder generell kann der Grundkörper ferner eine Rückstau- und/oder Revisionsklappe und/oder einen Revisionsschacht umfassen. Hierdurch wird beim Aufstellen des ausgelagerten Hausanschlussraumes gleichzeitig der Pflicht nachgekommen, einen Revisionsschacht bzw. eine entsprechende Revisionsöffnung auf dem Grundstück bereitzustellen. Auf diese Weise erfüllt der erfindungsgemäße Hausanschlussraum gleichzeitig die problemlose Wartung und Instandhaltung der notwendigen Gebäude- und/ oder Grundstücksentwässerung.

Nach einer vorteilhaften Ausgestaltung kann der Grundkörper mindestens ein Ausgangsloch besitzen. Unter einem Ausgangsloch wird eine Öffnung durch die Wandung des Grundkörpers hindurch verstanden. Hierbei kann das Ausgangsloch zur Aufnahme mindestens einer Verbindungsleitung dienen. Insofern kann das Ausgangsloch in vorteilhafter Weise dazu ausgebildet sein, das Gebäude unter Zwischenschaltung mindestens einer Verbindungsleitung mit der wenigstens einen in das Innere des Grundkörpers geführten Versorgungsleitung zu verbinden.

In diesem Zusammenhang ist vorgesehen, dass das Ausgangsloch in Bezug auf seine Lage gegenüber der Durchführung vertikal höher angeordnet sein kann. Dies ermöglicht in vorteilhafter Weise die Anbindung des ausgelagerten Hausanschlussraumes, insbesondere dessen Hausanschluss an das Gebäude in einer viel geringeren Tiefe als üblich. Neben einer einzuhaltenden Sicherheitstiefe (beispielsweise Spatenstich), ist hierbei eine frostfreie Tiefe der Verlegung insbesondere in Bezug auf wasserführende Leitungen zu beachten. Diese liegt in den meisten europäischen Breiten bei 80 cm. Aufgrund der geringeren Grabentiefe können Kosten in nicht unbeträchtlicher Höhe eingespart werden.

Mit Blick auf die Zugänglichkeit kann das Ausgangsloch bevorzugt in einer der den Grundkörper begrenzenden Wände angeordnet sein.

Bei der Versorgung von mehreren Gebäuden mit einem einzelnen ausgelagerten Hausanschlussraum erhöht sich die Ersparnis pro Gebäude überproportional, da die Kosten für den Hausanschlussraum und dessen Einbau weiterhin nur einmalig anfallen.

Nach einer vorteilhaften Weiterentwicklung der Erfindung kann der Grundkörper auch zur Aufnahme eines Mittels zur Energieerzeugung ausgebildet sein. Unter einem solchen Mittel kann beispielsweise ein Blockheizkraftwerk (BHKW) verstanden werden. Durch die dabei bestehende Kraft-Wärme-Kopplung kann das BHKW zur Versorgung des Gebäudes mit Strom und Wärme herangezogen werden. Die Anordnung des Mittels zur Energieerzeugung innerhalb des Grundkörpers stellt auch hier einen Raumgewinn in Bezug auf das Innere des Gebäudes bereit.

Bisherige Lösungen sehen die Anordnung solcher Mittel zur Energieerzeugung innerhalb des Gebäudes vor, so dass dessen Energie regelmäßig nur einem einzigen Gebäude zur Verfügung steht. Durch die Erfindung ist es nun möglich, mehr als ein Gebäude an ein zentrales Mittel zur Energieerzeugung anzuschließen, welches zentral innerhalb des erfindungsgemäßen Hausanschlussraumes angeordnet ist.

Hierdurch ergeben sich weitere Vorteile, so dass beispielsweise die Einspeisung von Solarenergie oder der Stromerzeugung nun nicht mehr über mehrere Einspeise-punkte erfolgen muss. Weiterhin lassen sich so etwaige Gewinnungskreislaufe bequem miteinander vernetzen. Auch wird die Nutzung effektiver Techniken für Einzelhaushalte attraktiver, da deren mitunter hohen Anschaffungskosten auf mehrere Gebäude umgelegt werden können. Dies gilt auch für die zwangsläufigen Folgekosten wie etwa die Wartung sowie Reparatur und Ablesung. Zudem gestaltet sich die Nachrüstung an nur einem zentralen Punkt entsprechend einfacher und somit kostengünstiger.

Mit Blick auf den ausgelagerten Hausanschlussraum kann dessen Grundkörper in bevorzugter Weise zumindest teilweise aus Beton, insbesondere bewehrtem Beton gebildet sein. Besonders bevorzugt kann es sich dabei um einen vollständig aus Beton, insbesondere bewehrtem Beton gefertigten Grundkörper handeln.

Weitere Ausgestaltungen des ausgelagerten Hausanschlussraumes können sich durch eine technisch sinnvolle Kombination einzelner oder mehrerer in der vorherigen Beschreibung aufgezeigter Merkmale sowie Maßnahmen ergeben und werden im Rahmen der Erfindung ausdrücklich mit beansprucht. Weitere Charakterisierungen und Spezifizierungen der Erfindung können sich insbesondere im Zusammenhang mit den nachfolgend beschriebenen Figuren ergeben, welche ebenfalls als Teil der Erfindung angesehen und beansprucht werden.

### KURZBESCHREIBUNG DER ZEICHNUNGEN

Nachfolgend wird die vorliegende Erfindung anhand einiger in den Zeichnungen schematisch dargestellter Ausführungsbeispiele näher erläutert. Es zeigen:
- Figur 1 -: einen erfindungsgemäßen ausgelagerten Hausanschlussraum in einer perspektivischen Ansicht,
- Figur 2: der erfindungsgemäße Hausanschlussraum aus Fig. 1 in der Vorbereitung einer alternativen Ausgestaltung in derselben Darstellungsweise,
- Figur 3 -: die alternative Ausgestaltung des erfindungsgemäßen Hausanschlussraumes aus Fig. 2 in seiner komplettierten Ausgestaltung in derselben Darstellungsweise.

### BESTER WEG ZUR AUSFÜHRUNG DER ERFINDUNG

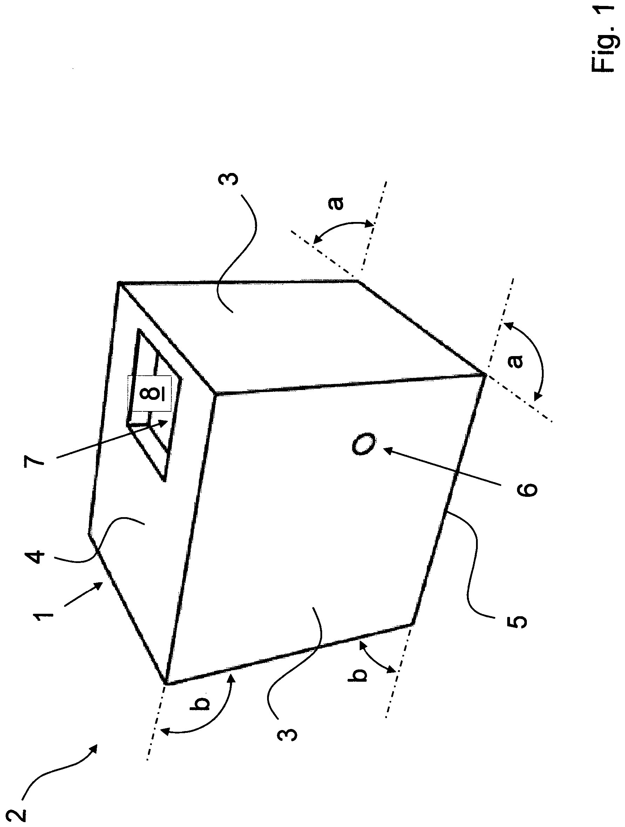

Figur 1 zeigt einen Grundkörper 1 eines erfindungsgemäßen ausgelagerten Hausanschlussraumes 2, welcher sich zur Ausbildung eines Hausanschlusses für ein nicht näher gezeigtes Gebäude eignet.

Wie zu erkennen, ist der Grundkörper 1 als Hohlkörper ausgebildet. Dabei sind die Dimensionen des Grundkörpers 1 so gewählt, dass dieser als begehbare Raumzelle genutzt werden kann. Hierzu weist der Grundkörper 1 in dieser Ausgestaltung insgesamt vier seitliche Wände 3 auf. Jeweils zwei der Wände 3 verlaufen dabei parallel, wobei die unmittelbar aneinanderstoßenden Wände 3 einen Winkel a zwischen sich einschließen. Bei dem Winkel a kann es sich bevorzugt um einen rechten Winkel handeln, so dass der Winkel a einen Wert von 90° aufweist.

Durch eine auf den Wänden 3 aufliegende Deckenplatte 4 sowie eine die Wände 3 tragende Bodenplatte 5 ist der Grundkörper 1 vorliegend allseitig geschlossen. Deckenplatte 4 und Bodenplatte 5 verlaufen hierbei ebenfalls parallel zueinander, wobei sowohl die Deckenplatte 4 als auch die Bodenplatte 5 jeweils zwischen sich und den Wänden 3 einen Winkel b einschließen. Bevorzugt kann auch dieser Winkel b einen Wert von 90° aufweisen, so dass sich eine rechtwinklige Kastenform für den Grundkörper 1 ergibt.

Bevorzugt kann der Grundkörper 1 zumindest teilweise aus Beton gebildet sein. Insbesondere vor dem Hintergrund einer selbsttragenden Ausgestaltung des Grundkörpers 1 kann der Beton in vorteilhafter Weise bewehrt sein. Idealerweise kann der Grundkörper 1 vollständig aus bewehrtem Beton gebildet sein. Dies ermöglicht eine einfache und kostengünstige Vorfertigung des Grundkörpers 1 und/oder des Hausanschlussraumes 2 in einem entsprechenden Werk. Auch wenn der Grundkörper 1 in Bezug auf die notwendige Dichtigkeit eine schwarze (bituminöse) Dichtung seiner Außenhülle besitzen kann, kann dieser besonders bevorzugt aus wasserundurchlässigem Beton (WU-Beton) gebildet sein. Neben den hierfür notwendigen Zusätzen sind dann die entsprechenden Mindestwerte an Wandungsdicken und/oder Bewehrungsgrad entsprechend einzuhalten.

Der Grundkörper 1 des Hausanschlussraumes 2 ist dazu vorgesehen, außerhalb des nicht näher gezeigten Gebäudes angeordnet zu werden. In dieser Lage dient der Grundkörper 1 quasi als ausgelagerter Hausanschlussraum 2, so dass ein Maximum an Wohn- und/oder Nutzfläche innerhalb des Gebäudes verbleibt. Um diese Aufgabe erfüllen zu können, muss der Hausanschlussraum 2 die Möglichkeit aufweisen, eine Verbindungsstelle zu den Netzen der Ver- und/oder Entsorgungsunternehmen anzubieten.

### Dies wird erfindungsgemäß wie folgt gelöst:

In einer der Wände 3 ist ein Durchbruch zu erkennen, welcher als Durchführung 6 durch die zugehörige Wand 3 hindurch dient. In ihrer Ausgestaltung als Durchführung 6 ist diese dazu ausgebildet, wenigstens eine nicht näher gezeigte Versorgungsleitung aufzunehmen. Insofern ist die Durchführung 6 dazu vorgesehen, wenigstens einer außerhalb des Grundkörpers 1 liegenden Versorgungsleitung deren Verlegung in den Grundkörper 1 hinein zu ermöglichen. Auf diese Weise fungiert die Durchführung 6 als Hauseinführung, insbesondere als vorgelagerte Hauseinführung.

Auf diese Weise bietet der erfindungsgemäße Hausanschlussraum 2 die vorteilhafte Möglichkeit, die im Zusammenhang mit einem Hausanschluss stehende und nicht näher gezeigte Peripherie aufnehmen zu können. Beispielhaft seien in diesem Zusammenhang Absperreinrichtungen sowie Regel- und Zählgeräte, wie auch Rohr- und Elektroleitungen zu nennen. Weiterhin kann der Grundkörper 1 auch eine zusätzliche Aufnahme für eine nicht näher gezeigte Wasserentsorgung aufweisen. Diese kann entweder innerhalb der Durchführung 6 integriert oder als davon getrennte Aufnahme ausgeführt sein, beispielsweise in Form eines weiteren Durchbruches. Bevorzugt kann diese Aufnahme dann in einer der Wände 3 oder der Bodenplatte 5 angeordnet sein.

Weiterhin muss zur Nutzung des erfindungsgemäßen Hausanschlussraumes 2 dieser in geeigneter Weise begehbar sein. Ersichtlich besitzt vorliegend die Deckenplatte 4 eine Zugangsöffnung 7, welche diese Anforderung erfüllen kann. So ist beispielsweise denkbar, dass eine nicht näher gezeigte Treppe oder Leiter innerhalb des hohlen Grundkörpers 1 angeordnet ist, welche über die Zugangsöffnung 7 erreichbar ist. Besonders bevorzugt ist die Zugangsöffnung 7 in nicht näher gezeigter Weise verschließbar, beispielsweise über ein von außen ver- und entriegelbares Verschlusselement, wie etwa eine nicht näher gezeigte Tür oder Klappe. In jedem Fall ist die Zugangsöffnung 7 dazu ausgebildet, durch diese hindurch in das Innere 8 des Grundkörpers 1 bzw. den Hausanschlussraum 2 zu gelangen.

Die hier gezeigte Anordnung der Zugangsöffnung 7 ist als beispielhaft anzusehen. Selbstverständlich kann diese auch in einer der Wände 3 des Grundkörpers 1 angeordnet sein. Da der_Hausanschlussraum 2 bevorzugt zumindest teilweise im Erdreich angeordnet wird, bedarf es bei einer entsprechend seitlichen Zugangsöffnung 7 einer geeigneten Zuwegung. Diese kann dann beispielsweise durch einen seitlich des Grundkörpers 1 gelegenen Treppenlauf gebildet sein.

Die eigentliche Dimensionierung des Grundkörpers 1, insbesondere dessen innere Abmessung, ist seitens des zuständigen Fachmannes zu wählen. So können diese sich beispielsweise bereits aus gesetzlichen und/oder kommunalen sowie betreiberseitigen Vorgaben ergeben, welche regelmäßig Mindestabmessungen für einen solchen Hausanschlussraum 2 festlegen. Hintergrund ist die uneingeschränkte Möglichkeit zur Begehung desselben, um beispielsweise Wartungs- und/oder Ablesearbeiten vornehmen zu können.

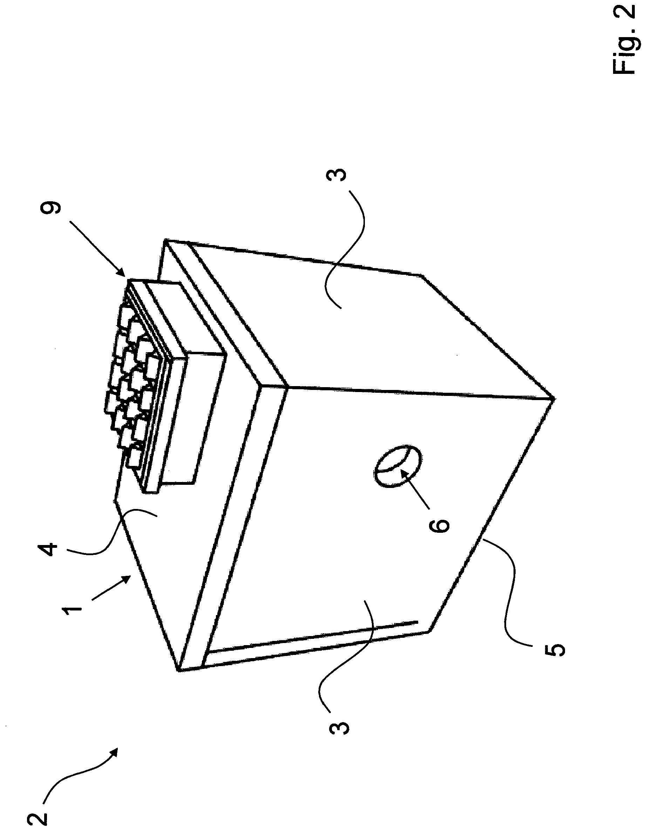

Figur 2 zeigt den ausgelagerten Hausanschlussraum 2 aus Fig. 1 in einer alternativen Ausgestaltung. Wie zu erkennen, umfasst der Grundkörper 1 nunmehr eine Einstiegsklappe mit Lüftungsgitter 9. Besonders bevorzugt kann dieser mit einer Aufnahme für eine nicht näher gezeigte Wasserentsorgung kombiniert sein. Hierdurch kann der erfindungsgemäße Hausanschlussraum 2 gleichzeitig die problemlose Wartung und Instandhaltung der notwendigen Gebäude- und/oder Grundstücksentwässerung ermöglichen. Aufgrund der Begehbarkeit des Hausanschlussraumes 2 muss kein Revisionsschacht zusätzlich auf dem Grundstück angelegt und angeschlossen werden.

Um nun eine Weiterleitung der an den Hausanschlussraum 2 angeschlossenen Versorgung zu dem jeweiligen Gebäude zu erreichen, besitzt der Grundkörper 1 mindestens ein nicht näher gezeigtes Ausgangsloch. Bevorzugt kann das Ausgangsloch in einer der den Grundkörper 1 begrenzenden Wände 3 angeordnet sein. Selbstverständlich ist auch eine Anordnung in der Bodenplatte 5 denkbar.

In seiner Anordnung ist das nicht näher gezeigte Ausgangsloch dann zur Aufnahme mindestens einer Verbindungsleitung vorgesehen. Hierdurch kann das zugehörige Gebäude unter Zwischenschaltung der Verbindungsleitung mit der wenigstens einen in das Innere 8 des Grundkörpers 1 geführten Versorgungsleitung verbunden werden.

Mit Blick auf weitere Kosteneinsparungen hinsichtlich notwendiger Erdarbeiten ist vorgesehen, dass das in Rede stehende und nicht weiter ersichtliche Ausgangsloch es ermöglicht, die Verbindungsleitung zum Gebäude beispielsweise nur in einer frostfreien Tiefe zu verlegen. Da sich die ver- bzw. entsorgerseitigen Leitungen in einer deutlich tieferen Lage befinden, kann durch eine entsprechend höhere Verlegung der wenigstens einen Verbindungsleitung zwischen ausgelagertem Hausanschlussraum 2 und Gebäude eine entsprechende Ersparnis erreicht werden. Hierzu kann das Ausgangsloch in Bezug auf seine Lage gegenüber der Durchführung vertikal höher angeordnet sein.

Weiterhin denkbar ist die Anordnung eines nicht näher gezeigten Mittels zur Energieerzeugung, beispielsweise eines Blockheizkraftwerks (BHKW), einer Kraftwärmekopplungseinrichtung (KWK), Erdwärmevorrichtung usw. Hierzu kann der Grundkörper 1 in idealer Weise zur Aufnahme eines solchen Mittels zur Energieerzeugung ausgebildet sein. Sowohl in diesem Zusammenhang als auch generell kann der erfindungsgemäße Hausanschlussraum 2 dazu genutzt werden, mit mehr als nur einem Gebäude verbunden zu werden. Hierdurch ergeben sich diverse Einsparmöglichkeiten, welche im Vorfeld bereits im Detail angesprochen wurden.

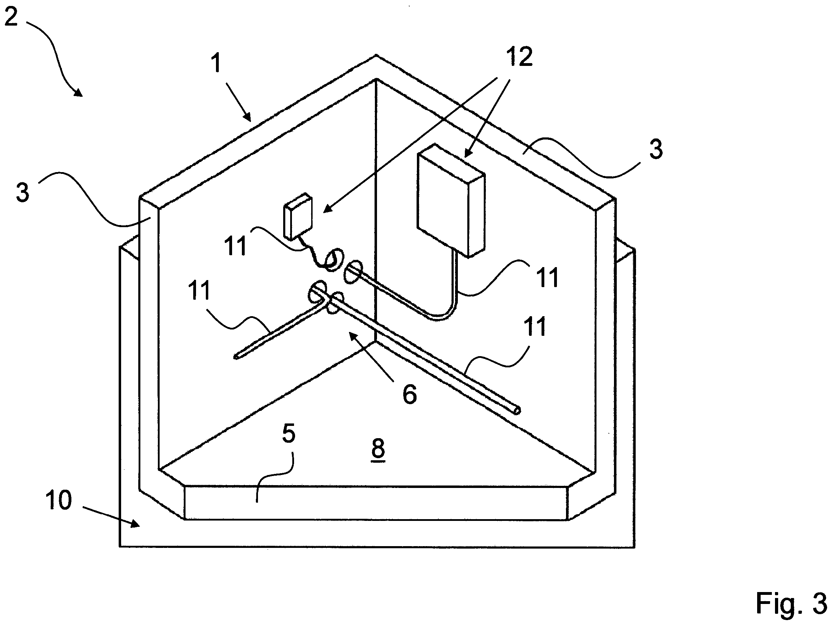

Figur 3 verdeutlicht nochmals das Innere 8 des Grundkörpers 1 in einem perspektivischen Teilausschnitt. Dieser ist vorliegend in einem Erdreich 10 gelegen. Hierin ist insbesondere die Durchführung 6 zu erkennen, welche zur Aufnahme von Versorgungsleitungen 11 dient. Im Inneren 8 des Grundkörpers 1 werden zumindest einige der Versorgungsleitungen 11 mit einer zuvor bereits angesprochenen Peripherie 12 verbunden.

## Patentansprüche

1. Hausanschlussraum zur Ausbildung eines Hausanschlusses für ein Gebäude, insbesondere für mindestens ein Wohngebäude, umfassend einen zur Aufnahme von Bauteilen und Geräten für den Hausanschluss vorgesehenen Grundkörper (1), insbesondere von Absperreinrichtungen sowie Regel- und Zählgeräten nebst Rohr- und Elektroleitungen, welcher diesen begrenzende Wände (3) und eine in einer der Wände (3) angeordnete Durchführung (6) besitzt, wobei die Durchführung (6) eine Hauseinführung in Form einer Mehrsparteneinführung besitzt, welche zur Aufnahme mehrerer Versorgungsleitungen (11) ausgebildet ist, insbesondere für die Bereitstellung von Elektrizität sowie Gas, Kommunikation und Trinkwasser wie auch möglicher Fernwärme, wobei der Grundkörper (1) als begehbare Raumzelle ausgebildet ist,
**dadurch gekennzeichnet,**
**dass** der Hausanschlussraum zur Ausbildung des Hausanschlusses außerhalb des Gebäudes auslagerbar und in Gestalt eines Fertigbauteils ausgebildet ist.

2. Hausanschlussraum nach Anspruch 1,
**dadurch gekennzeichnet,**
**dass** der Grundkörper (1) eine verschließbare Zugangsöffnung (7) besitzt, wobei die Zugangsöffnung (7) dazu ausgebildet ist, durch diese hindurch in das Innere (8) des Grundkörpers (1) zu gelangen.

3. Hausanschlussraum nach einem der vorhergehenden Ansprüche,
**dadurch gekennzeichnet,**
**dass** der Grundkörper (1) eine Aufnahme für eine Wasserentsorgung aufweist.

4. Hausanschlussraum nach einem der vorhergehenden Ansprüche,
**dadurch gekennzeichnet,**
**dass** der Grundkörper (1) einen Revisionsschacht (9) umfasst.

5. Hausanschlussraum nach einem der vorhergehenden Ansprüche,
**dadurch gekennzeichnet,**
**dass** der Grundkörper (1) mindestens ein Ausgangsloch besitzt, wobei das Ausgangsloch zur Aufnahme mindestens einer Verbindungsleitung vorgesehen und dazu ausgebildet ist, das Gebäude unter Zwischenschaltung der Verbindungsleitung mit der wenigstens einen in das Innere des Grundkörpers (1) geführten Versorgungsleitung (11) zu verbinden.

6. Hausanschlussraum nach Anspruch 5,
**dadurch gekennzeichnet,**
**dass** das Ausgangsloch in Bezug auf seine Lage gegenüber der Durchführung (6) vertikal höher angeordnet ist.

7. Hausanschlussraum nach Anspruch 5 oder 6,
**dadurch gekennzeichnet,**
**dass** das Ausgangsloch in einer der den Grundkörper (1) begrenzenden Wände (3) angeordnet ist.

8. Hausanschlussraum nach einem der vorhergehenden Ansprüche,
**dadurch gekennzeichnet,**
**dass** der Grundkörper (1) zur Aufnahme eines Mittels zur Energieerzeugung ausgebildet ist.

9. Hausanschlussraum nach einem der vorhergehenden Ansprüche,
**dadurch gekennzeichnet,**
**dass** der Grundkörper (1) zumindest teilweise aus bewehrtem Beton gebildet ist.

10. Hausanschlussraum nach einem der vorigen Ansprüche,
**dadurch gekennzeichnet,**
**dass** er unterirdisch angeordnet ist.

## Claims

1. Service connection room for forming a service connection for a building, in particular for at least one residential building, comprising a base body (1), provided for receiving structural parts and devices for the service connection, in particular shut-off devices as well as control and meter devices as well as pipelines and electrical cables, and which has walls (3) defining the base body as well as a passage (6) arranged in one of the walls (3), wherein the passage (6) has a service installation in the form of a multi-utility installation which is configured to receive several supply lines (11), in particular for providing electricity as well as gas, communications and drinking water as well as possible district heating, wherein the base body (1) is formed as an accessible room cell,
**characterised in that**
the service connection room can be placed outside the building for forming the service connection, and is designed in the form of a prefabricated component.

2. Service connection room according to Claim 1
**characterised in that**
the base body (1) has a closable access opening (7) wherein the access opening (7) is designed to pass through into the interior (8) of the base body (1).

3. Service connection room according to one of the preceding claims
**characterised in that**
the base body (1) has a receiver for water disposal.

4. Service connection room according to one of the preceding claims
**characterised in that**
the base body (1) comprises an inspection shaft (9).

5. Service connection room according to one of the preceding claims
**characterised in that**
the base body (1) has at least one outlet hole wherein the outlet hole is provided for receiving at least one connecting line and is configured to connect the building with the interposition of the connecting line to the at least one supply line (11) guided into the interior of the base body (1).

6. Service connection room according to Claim 5
**characterised in that**
the outlet hole is arranged vertically higher in relation to its position relative to the passage (6).

7. Service connection room according to Claim 5 or 6
**characterised in that**
the outlet hole is arranged in one of the walls (3) defining the base body (1).

8. Service connection room according to one of the preceding claims
**characterised in that**
the base body (1) is designed to receive means for energy production.

9. Service connection room according to one of the preceding claims
**characterised in that**
the base body (1) is formed at least in part from reinforced concrete.

10. Service connection room according to one of the preceding claims
**characterised in that**
it is arranged underground.

## Revendications

1. Local de branchement individuel destiné à permettre un branchement individuel pour un bâtiment, en particulier pour au moins un bâtiment d'habitation, comprenant un corps de base (1), destiné à recevoir des composants et des appareils pour le branchement individuel, en particulier des dispositifs de coupure ainsi que des appareils de régulation et des compteurs ainsi que des conduites et des lignes électriques, qui possède des parois (3) le limitant et une traversée (6), agencée dans l'une des parois (3), dans lequel la traversée (6) a une entrée dans le bâtiment sous forme d'entrée multi-branche, qui est conçue pour recevoir une pluralité de conduites d'alimentation (11), en particulier pour fournir l'électricité et le gaz, les communications et l'eau potable ainsi qu'éventuellement le chauffage urbain, dans lequel le corps de base (1) est réalisé sous la forme d'une cellule dans laquelle il est possible d'entrer,
**caractérisé en ce**
**que** le local de branchement individuel, destiné à permettre un branchement individuel, est destinée à être disposée à l'extérieur du bâtiment et est conçu sous la forme d'un élément préfabriqué.

2. Local de branchement individuel selon la revendication 1,
**caractérisé en ce**
**que** le corps de base (1) comporte une ouverture d'accès (7) verrouillable, dans lequel l'ouverture d'accès (7) est conçue pour être traversée jusqu'à l'intérieur du corps de base (1).

3. Local de branchement individuel selon l'une quelconque des revendications précédentes,
**caractérisé en ce**
**que** le corps de base (1) comporte un logement pour une évacuation d'eau.

4. Local de branchement individuel selon l'une quelconque des revendications précédentes,
**caractérisé en ce**
**que** le corps de base (1) comporte un puits d'inspection (9) .

5. Local de branchement individuel selon l'une quelconque des revendications précédentes,
**caractérisé en ce**
**que** le corps de base (1) comporte au moins un trou de sortie, dans lequel le trou de sortie est prévu pour recevoir au moins une ligne de raccordement et est conçu pour relier le bâtiment, avec interposition de la ligne de raccordement, à l'au moins une conduite d'alimentation (11), menée à l'intérieur du corps de base (1).

6. Local de branchement individuel selon la revendication 5,
**caractérisé en ce**
**que** le trou de sortie est agencé verticalement plus haut concernant sa position par rapport à la traversée (6) .

7. Local de branchement individuel selon la revendication 5 ou 6,
**caractérisé en ce**
**que** le trou de sortie est agencé dans une des parois (3) délimitant le corps de base (1).

8. Local de branchement individuel selon l'une quelconque des revendications précédentes,
**caractérisé en ce**
**que** le corps de base (1) est conçu pour recevoir un moyen de production d'énergie.

9. Local de branchement individuel selon l'une quelconque des revendications précédentes,
**caractérisé en ce**
**que** le corps de base (1) au moins partiellement est formé de béton armé.

10. Local de branchement individuel selon l'une quelconque des revendications précédentes,
**caractérisé en ce**
**qu'**il est situé en sous-sol.
